# EUROPÄISCHE PATENTSCHRIFT

(11) **EP 3 274 735 B1**
(45) Veröffentlichungstag und Bekanntmachung des Hinweises auf die Patenterteilung: **08.05.2019**
(21) Anmeldenummer: 16711596.3
(22) Anmeldetag: 21.03.2016
(51) Int. Cl.: G01S 3/786, G01S 1/70, G01S 5/16

(54) **TRACKING-SYSTEM UND VERFAHREN ZUM TRACKEN EINES TRÄGERS EINER MOBILEN KOMMUNIKATIONSEINHEIT**
TRACKING SYSTEM AND METHOD FOR TRACKING A CARRIER OF A MOBILE COMMUNICATION UNIT
SYSTÈME ET PROCÉDÉ DE POURSUITE DU PORTEUR D'UNE UNITÉ DE COMMUNICATION MOBILE

(30) Priorität: 23.03.2015 DE 102015205220
(43) Veröffentlichungstag der Anmeldung: 31.01.2018
(73) Patentinhaber: OSRAM GmbH, 80807 München (DE)
(72) Erfinder: FEIL, Henry, 82008 Unterhaching (DE)
(86) Internationale Anmeldenummer: PCT/EP2016/056082
(87) Internationale Veröffentlichungsnummer: WO 2016/150890

(56) Entgegenhaltungen:
- US-A1- 2005 093 976
- US-A1- 2013 028 609
- US-A1- 2013 128 054

## Beschreibung

Die vorliegende Erfindung betrifft ein Tracking-System umfassend mindestens eine Lichtquelle, die ausgelegt ist, mit einem Lichtsignal eine eindeutige, der Lichtquelle zugeordnete Identifizierungsinformation auszusenden, sowie eine mobile Kommunikationseinheit mit einer Kamera, wobei die mobile Kommunikationseinheit ausgelegt ist, die von der mindestens einen Lichtquelle ausgesendete Identifizierungsinformation unter Verwendung ihrer Kamera zu empfangen. Die Erfindung betrifft weiterhin ein Verfahren zum Tracken eines Trägers einer mobilen Kommunikationseinheit mittels eines derartigen Tracking-Systems.

Bekannte lichtbasierte Tracking-Systeme beruhen auf der Aussendung einer eindeutigen Licht-Identifizierungsinformation (LID), die mithilfe einer mobilen Kommunikationseinheit empfangen und detektiert werden kann. Die LID wird hierzu für das menschliche Auge unsichtbar dem Lichtstrom aufmoduliert. Um das aufmodulierte Signal mit einer mobilen Kommunikationseinheit zu detektieren, muss eine Sichtverbindung (Line-Of-Sight) zwischen der mobilen Kommunikationseinheit und der modulierenden Lichtquelle bestehen. Nach dem Empfang wird die LID aus dem Licht herausgefiltert und demoduliert. Die LID kann selbst eine Positionsinformation beinhalten; es kann jedoch auch vorgesehen sein, dass die mobile Kommunikationseinheit die demodulierte LID an eine zentrale Steuereinheit sendet, die dort über eine Look-Up-Tabelle eine der LID zugeordnete Positionsangabe ermittelt und an die mobile Kommunikationseinheit zurücksendet. Die Zuordnung zwischen LIDs und Positionsinformationen wird zuvor in der zentralen Steuereinheit abgelegt. Neben der Positionsinformation können beliebige weitere Metadaten mit der LID verknüpft werden. Neben der erwähnten Realisierung, bei der die Look-Up-Tabelle in einer externen zentralen Steuereinheit hinterlegt ist, kann die Look-Up-Tabelle aber auch als integrierter Teil in einer Anwendung hinterlegt sein, welche auf der mobilen Kommunikationseinheit abläuft. Umgekehrt kann die Look-Up-Tabelle auch dynamische Informationen aufnehmen, beispielsweise welche mobile Kommunikationseinheit welche Positionsinformation abgefragt hat. Damit lässt sich ein dynamisches Bewegungsprofil aufzeichnen (Tracking) und mit einem Zeitstempel abspeichern (Tracing). Diese Bewegungsinformationen können die Grundlage für verschiedenste ortsbezogene Dienste und Analysen bilden.

Diese bekannte Vorgehensweise funktioniert allerdings nur, solange eine Sichtverbindung zwischen der mobilen Kommunikationseinheit und der die LID aussendenden Lichtquelle besteht. Wird als mobile Kommunikationseinheit beispielsweise ein Mobiltelefon benutzt und dieses nach der Positionsabfrage von der benutzenden Person, dem Träger, wieder in eine Tasche, beispielsweise eine Hosentasche, eine Jackentasche oder eine Handtasche, gesteckt, erhält man zwar eine Positionierungsinformation, die im System abgespeichert werden kann, allerdings kann im weiteren Verlauf nicht mehr ermittelt werden, wie der Träger der mobilen Kommunikationseinheit seine Position im Raum weiter verändert hat.

Alternativ gibt es verschiedene drahtlose funkbasierte Systeme wie zum Beispiel WLAN oder Bluetooth. Hierbei ist zum einen die Position des Senders, beispielsweise WLAN Access Point WAC oder iBeacon, bekannt und anhand der Signalfeldstärke des empfangenen Signals (Received Signal Strength RSSI) lässt sich der Abstand zwischen Sender und mobiler Kommunikationseinheit abschätzen. Nach den Regeln der Trilateration werden für eine eindeutige Positionierung mindestens drei verschiedene Sendequellen benötigt.

Im Vergleich zu einer lichtbasierten Indoor-Navigation ergeben sich mehrere Nachteile: Zum einen muss eine genügend große Anzahl von Radio-Sendequellen installiert werden. Im Gegensatz hierzu ist die Anzahl der Lichtquellen, die üblicherweise für die Beleuchtung ohnehin vorhanden ist, bereits ausreichend. Für die benötigten Radio-Sendequellen muss eine Energieversorgung sichergestellt werden. Bei WAC ist hierzu eine Netzversorgung notwendig. Bei iBeacons mit geringerer Leistungsaufnahme werden Batterien benötigt, die entsprechend alle innerhalb eines Jahres ausgetauscht werden müssen. Im Gegensatz hierzu ist bei der Installation der Beleuchtung immer bereits eine Netzversorgung vorhanden. Schließlich ergibt sich bei radiobasierten Indoor-Positionslösungen eine Genauigkeit von lediglich 5 m bis 10 m. Im Gegensatz hierzu können lichtbasierte Systeme eine Genauigkeit von bis zu weniger als 10 cm erreichen.

Zusammenfassend ist festzustellen, dass erst durch die hohe Genauigkeit lichtbasierter Systeme die Möglichkeit geschaffen wird, mobile Empfänger und damit auch die Träger solcher Systeme, beispielsweise Personen, Maschinen, Roboter, hinreichend genau zu tracken, um beispielsweise ortsbezogene Dienste und Analysen mit hoher Zuverlässigkeit zu ermöglichen.

Die Aufgabe der vorliegenden Erfindung besteht deshalb darin, ein gattungsgemäßes Tracking-System bzw. ein gattungsgemäßes Verfahren zum Tracken eines Trägers einer mobilen Kommunikationseinheit derart weiterzubilden, dass auch ohne Sichtverbindung zwischen der die Identifizierungsinformation ausstrahlenden Lichtquelle und der mobilen Kommunikationseinheit ein Tracken ermöglicht wird.

Diese Aufgabe wird gelöst durch ein Tracking-System mit den Merkmalen von Patentanspruch 1 sowie durch ein Verfahren zum Tracken eines Trägers einer mobilen Kommunikationseinheit mit den Merkmalen von Patentanspruch 18.

Der vorliegenden Erfindung liegt zunächst die Erkenntnis zugrunde, dass ein Tracken grundsätzlich auch ohne Sichtverbindung ermöglicht wird, wenn die mobile Kommunikationseinheit bzw. der Träger der mobilen Kommunikationseinheit identifiziert wird, solange eine Sichtverbindung besteht. Damit ist die Voraussetzung geschaffen, die mobile Kommunikationseinheit bzw. den Träger der mobilen Kommunikationseinheit aufgrund der Identifikation auch dann, wenn keine Sichtverbindung mehr besteht, mittels einer Kamera weiter zu verfolgen.

Die vorliegende Erfindung basiert weiterhin auf der Erkenntnis, dass mittlerweile zu dem Zweck, in Räumen eine effiziente, tageslicht-/tageszeitabhängige und kontextsensitive Beleuchtung zu ermöglichen, neben klassischen Bewegungssensoren (PIR Passive Infrared Receiver) mittlerweile kamerabasierte, so genannte Advanced Lighting Sensors (ALS) eingesetzt werden, welche kostengünstig in der Lage sind, neben der reinen Präsenzdetektion auch eine spektrale Bewertung der Beleuchtungssituation (Kunst- und Tageslicht) durchzuführen. Mithilfe eines intelligenten Licht-Managementsystems (iLMS) können diese Informationen ausgewertet und die verschiedenen Lichtquellen entsprechend den Anforderungen bzw. Vorgaben angesteuert werden. Neben den klassischen Beleuchtungsaufgaben, d.h. der Einstellung eines lokalen Beleuchtungsniveaus, eines bestimmten Lichtspektrums und dergleichen, kann das iLMS auch die von den Lichtquellen ausgesendeten LIDs dynamisch verändern oder zusätzlich zu der LID weitere Daten über eine Lichtquelle ausgeben, beispielsweise die oben bereits erwähnten Metadaten.

Wird nun von einem mobilen Kommunikationsgerät eine LID erfasst und diese Information zur Abfrage an das iLMS weitergegeben, so erhält das System aus einer in dem iLMS gespeicherten Look-Up-Tabelle, in der der LID eine Position zugeordnet ist, die Position der mobilen Kommunikationseinheit. Mithilfe des ALS kann dann die mobile Kommunikationseinheit oder der Träger der mobilen Kommunikationseinheit im Raum erfasst, identifiziert und somit weiter getrackt werden.

Erfindungsgemäß umfasst ein Tracking-System daher weiterhin mindestens einen Lichtsensor mit einer Kamera, beispielsweise mindestens einen, oben erwähnten ALS, eine zentrale Steuereinheit (beispielsweise als Teil des oben erwähnten iLMS), die zumindest mit dem mindestens einen Lichtsensor gekoppelt ist, wobei die mobile Kommunikationseinheit weiterhin ausgelegt ist, bei Empfang der Identifizierungsinformation, beispielsweise der oben erwähnten LID, ein Aktivierungssignal zum Aktivieren eines Tracking-Vorgangs an die zentrale Steuereinheit auszusenden, wobei das Aktivierungssignal mit der empfangenen Identifizierungsinformation korrelierte Daten umfasst. Die zentrale Steuereinheit ist ausgelegt, auf der Basis des von der mobilen Kommunikationseinheit übermittelten Aktivierungssignals zu ermitteln, an welcher Position die mobile Kommunikationseinheit angeordnet ist, und welcher mindestens eine Lichtsensor derart zu der Position der mobilen Kommunikationseinheit angeordnet ist, dass mit dessen Kamera die mobile Kommunikationseinheit erfassbar ist. Dabei ist die zentrale Steuereinheit weiterhin ausgelegt, die Kamera des ermittelten, zumindest einen Lichtsensors zum Bereitstellen von Bildinformationen mittels seiner Kamera an die zentrale Steuereinheit anzusteuern, um einen Träger der mobilen Kommunikationseinheit an der ermittelten Position zu ermitteln und zu identifizieren. Die zentrale Steuereinheit ist weiterhin ausgelegt, mindestens einen mit ihr gekoppelten Lichtsensor zum Tracken des identifizierten Trägers der mobilen Kommunikationseinheit anzusteuern.

Der Vorteil der erfindungsgemäßen Lösung besteht darin, dass damit auch dann, wenn keine Sichtverbindung mehr zwischen der mobilen Kommunikationseinheit und den die LIDs aussendenden Lichtquellen im Raum besteht oder die Anwendung für die Positionsbestimmung auf der mobilen Kommunikationseinheit beendet wurde oder die mobile Kommunikationseinheit sogar ganz abgeschaltet wurde, weiterhin die mobile Kommunikationseinheit bzw. ihr Träger getrackt werden kann.

Damit können aber dann Personen und Objekte, die eine mobile Kommunikationseinheit tragen, auch dort getrackt werden, wo keine LID mehr vorhanden ist, beispielsweise in Bereichen mit einer Abschattung oder ohne LID-Installation, oder zu Zeiten, zu denen aus Energie- oder Kostengründen die Beleuchtung ausgeschaltet ist, oder in Tageslichtbereichen oder Außenbereichen. Dies kann aber auch der Fall sein, wenn Personen aus einem Flurbereich mit Kunstlicht und LID-Versorgung in einen Raum mit viel Tageslichteintrag kommen.

Eine bevorzugte Ausführungsform eines erfindungsgemäßen Tracking-Systems zeichnet sich dadurch aus, dass der mindestens eine Lichtsensor ausgelegt ist, die von der mindestens einen Lichtquelle ausgesendete Identifizierungsinformation unter Verwendung seiner Kamera zu empfangen und damit korrelierte Daten an die zentrale Steuereinheit zu senden, wobei die zentrale Steuereinheit ausgelegt ist, aus einem Vergleich der von dem mindestens einen Lichtsensor an die zentrale Steuereinheit gesendeten Daten mit den von der mobilen Kommunikationseinheit an die zentrale Steuereinheit gesendeten Daten zu ermitteln, welcher mindestens eine Lichtsensor derart zu der Position der mobilen Kommunikationseinheit angeordnet ist, dass mit dessen Kamera die mobile Kommunikationseinheit erfassbar ist.

In einer vorteilhaften Ausgestaltung ist in der zentralen Steuereinheit die Position des mindestens einen Lichtsensors hinterlegt, wobei die zentrale Steuereinheit ausgelegt ist, durch eine Auswertung der von der mobilen Kommunikationseinheit an die zentrale Steuereinheit gesendeten Daten und einen Vergleich der ausgewerteten Daten mit der hinterlegten Position des mindestens einen Lichtsensors zu ermitteln, welcher mindestens eine Lichtsensor derart zu der Position der mobilen Kommunikationseinheit angeordnet ist, dass mit dessen Kamera die mobile Kommunikationseinheit erfassbar ist. Diese Ausgestaltung hat den Vorteil, dass die von der Lichtquelle ausgesendete Identifizierungsinformation vom Lichtsensor nicht empfangen und an die zentrale Steuereinheit gesendet werden braucht, da die Position des mindestens einen Lichtsensors, insbesondere die Position des jeweiligen Lichtsensors in Relation zu den Lichtquellen, bereits in der zentralen Steuereinheit hinterlegt ist.

In diesem Zusammenhang ist es bevorzugt, wenn in der zentralen Steuereinheit eine Look-Up-Tabelle hinterlegt ist, aus der auf der Basis der von der mobilen Kommunikationseinheit gesendeten Daten Angaben zur Position der mobilen Kommunikationseinheit ermittelbar sind. Auf diese Weise erlangt die zentrale Steuereinheit besonders einfach Kenntnis von der Position der mobilen Kommunikationseinheit.

Alternativ hierzu kann vorgesehen sein, dass in der von der mindestens einen Lichtquelle ausgesendeten Identifizierungsinformation bereits eine Positionsangabe der Lichtquelle enthalten ist. Die zentrale Steuereinheit ist dann ausgelegt, aus den von der mobilen Kommunikationseinheit an die zentrale Steuereinheit gesendeten Daten eine Position der mobilen Kommunikationseinheit zu ermitteln.

Während es bei der erstgenannten Variante genügt, wenn die Lichtquellen eine jedenfalls ihnen eindeutig zugeordnete Identifizierungsinformation aussenden, ist bei der zweitgenannten Variante eine Ansteuerung oder Auslegung der Lichtquelle dahingehend vorzunehmen, dass diese bereits Informationen zu ihrer Position aussendet. Dies erfordert etwas mehr Aufwand im Vorfeld.

Die mobile Kommunikationseinheit kann weiterhin ausgelegt sein, den relativen Raumwinkel zu ermitteln, unter dem die mindestens eine Lichtquelle, deren Identifizierungsinformation sie empfängt, gegenüber der aktuellen Lage der mobilen Kommunikationseinheit angeordnet ist. Auf diese Weise wird grundsätzlich die Möglichkeit geschaffen, dass die mobile Kommunikationseinheit genauer geortet werden kann bzw. sich selbst genauer orten kann. Insbesondere wenn mehrere potentielle Träger, insbesondere Personen, in dem fraglichen Bereich, in dem der Träger einer Kommunikationseinheit ermittelt und identifiziert werden soll, in Betracht kommen, trägt dies dazu bei, die Auswahl zuverlässiger zu machen.

In diesem Zusammenhang ist es vorteilhaft, wenn das Tracking-System, insbesondere die mobile Kommunikationseinheit und/oder die zentrale Steuereinheit, ausgelegt ist, den ermittelten relativen Raumwinkel beim Ermitteln der Position der mobilen Kommunikationseinheit zu berücksichtigen. Mit anderen Worten kann der relative Raumwinkel bereits seitens der mobilen Kommunikationseinheit berücksichtigt werden, sofern dort die entsprechenden Programme und Rechenkapazitäten vorgesehen sind. Besonders einfach kann dies jedoch, wie erwähnt, in der zentralen Steuereinheit erledigt werden, da dort aufgrund der üblicherweise stationären Anordnung größere Rechenkapazitäten vorgesehen werden können.

Als besonders vorteilhaft hat es sich erwiesen, wenn in dem Tracking-System, insbesondere in der mobilen Kommunikationseinheit und/oder in der zentralen Steuereinheit, eine vorgebbare Position der mobilen Kommunikationseinheit in vertikaler Richtung hinterlegt ist, wobei das Tracking-System, insbesondere die mobile Kommunikationseinheit und/oder die zentrale Steuereinheit, ausgelegt ist, diese vorgebbare Position beim Ermitteln der Position der mobilen Kommunikationseinheit zu berücksichtigen. Alternativ kann seitens des Tracking-Systems, wobei hier wiederum die mobile Kommunikationseinheit und/oder die zentrale Steuereinheit in Betracht kommen, eine entsprechende vorgebbare Position angenommen werden: Wird beispielsweise die mobile Kommunikationseinheit von einer Person getragen, so kann als vorgebbare Position in vertikaler Richtung eine Höhe von etwa 1 m über dem Boden angenommen werden oder, wie bei der erstgenannten Variante, hinterlegt werden. Handelt es sich beispielsweise aber um einen automatischen Staubsauger, kommt für die vertikale Position eine Höhe über dem Boden von 10 cm bis 20 cm in Betracht. Für andere Arten von Trägern einer mobilen Kommunikationseinheit können selbstverständlich andere Höhen angenommen werden.

Durch die Annahme oder die Hinterlegung einer vertikalen Position der mobilen Kommunikationseinheit kann eine Identifikation eines Trägers der mobilen Kommunikationseinheit noch zuverlässiger erfolgen, da Parallaxenfehler beim Erfassen durch die Kamera eines Lichtsensors weitgehend vermieden werden können.

Die mobile Kommunikationseinheit umfasst bevorzugt mindestens einen weiteren Sensor, insbesondere einen Magnetfeldsensor und/oder einen Beschleunigungssensor, wobei das Tracking-System, insbesondere die mobile Kommunikationseinheit und/oder die zentrale Steuereinheit, ausgelegt ist, die Messwerte dieses mindestens einen weiteren Sensors bei der Ermittlung der Position der mobilen Kommunikationseinheit, insbesondere ihrer absoluten Position, zu berücksichtigen. Durch einen Magnetfeldsensor, insbesondere durch drei Magnetfeldsensoren, kann in bekannter Weise eine absolute Position der mobilen Kommunikationseinheit bestimmt werden. Beschleunigungssensoren können dazu eingesetzt werden, Bewegungen ausgehend von einem Referenzpunkt zu erfassen. Auch die Messwerte dieser Sensoren tragen zu einer weiteren Verbesserung der Ermittlung der Position der mobilen Kommunikationseinheit und damit zu einem noch zuverlässigeren Tracken derselben bei.

Der mindestens eine Lichtsensor kann ausgelegt sein, bei Erfassung des Trägers der mobilen Kommunikationseinheit eine entsprechende Information an die zentrale Steuereinheit zu senden. Dadurch erlangt die zentrale Steuereinheit Kenntnis von einem erfolgreich gestarteten Tracking-Vorgang. Eine Auswertung weiterer, beispielsweise von der mobilen Kommunikationseinheit gesendeter Daten bzw. eine entsprechende Ansteuerung von mindestens einem Lichtsensor kann daraufhin unterbleiben.

Das Tracking-System, insbesondere der mindestens eine Lichtsensor und/oder die zentrale Steuereinheit, kann ausgelegt sein, Merkmale, insbesondere Größe, Art des Trägers, Geschlecht, Haarschnitt, Haarfarbe, Gesichtsmerkmale und/oder Kleidungsmerkmale, des Trägers der mobilen Kommunikationseinheit zu ermitteln und beim Tracken des Trägers der mobilen Kommunikationseinheit zu berücksichtigen. Entsprechende Software ist beispielsweise aus dem Bereich der Digitalkameras hinlänglich bekannt. Wie für den Fachmann offensichtlich, lässt sich derartige Software auch in Zusammenhang mit der vorliegenden Erfindung vorteilhaft einsetzen. Werden mehrere dieser Merkmale ermittelt, ist es für das Tracking-System deutlich vereinfacht, den identifizierten Träger auch dann weitgehend zuverlässig weiterzuverfolgen, wenn sich dieser in einer Menschenmasse bewegt oder in eine solche eintaucht.

Der mindestens eine Lichtsensor kann mindestens einen Sensor aus der nachfolgenden Gruppe von Sensoren umfassen: mindestens ein Mikrofon, wobei der mindestens eine Lichtsensor ausgelegt ist, mittels des mindestens einen Mikrofons ein akustisches Merkmal, insbesondere Sprache und/oder Auftrittsgeräusch des Trägers der mobilen Kommunikationseinheit, zu ermitteln und beim Tracken des Trägers der mobilen Kommunikationseinheit zu berücksichtigen. Ist der Träger der mobilen Kommunikationseinheit ein Gerät, beispielsweise ein Staubsauger, so kann auch dessen Geräuschemission mit dem mindestens einen Mikrofon erfasst und für das weitere Tracken verwendet werden. Weitere Sensoren, die der mindestens eine Lichtsensor umfassen kann, können sein Temperatursensor, Luftfeuchtigkeitssensor sowie Spektralsensor zum Durchführen einer spektralen Bewertung einer Beleuchtungssituation.

Die zentrale Steuereinheit ist bevorzugt ausgelegt, bei Empfang eines von der mobilen Kommunikationseinheit gesendeten Aktivierungssignals mit Daten, die mit der Identifizierungsinformation der mindestens einen Lichtquelle korreliert sind, die entsprechende Lichtquelle derart anzusteuern, dass diese ein vorbestimmtes Lichtsignal aussendet. Das vorbestimmte Lichtsignal kann beispielsweise in einem Blinken oder einer Lichtabgabe in einer anderen Farbe, d.h. durch Vornahme eines kurzzeitigen Farbwechsels, erfolgen. Auf diese Weise wird eine Informationsweiterleitung bereitgestellt, die unabhängig von der IT-Infrastruktur über Licht funktioniert. Lichtquellen und Lichtsensoren müssen bei einem derartigen System nicht mit derselben zentralen Steuereinheit verbunden sein.

In diesem Zusammenhang kann der mindestens eine Lichtsensor ausgelegt sein, das vorbestimmte Lichtsignal zu empfangen und beim Tracken des Trägers der mobilen Kommunikationseinheit zu berücksichtigen. Die Berücksichtigung erfolgt insbesondere derart, dass der Lichtsensor bei Detektion eines derartigen vorbestimmten Lichtsignals in Kenntnis gesetzt wird, dass in räumlicher Nähe zu der entsprechenden Lichtquelle eine mobile Kommunikationseinheit angeordnet ist, für die ein Tracking-Vorgang vorzunehmen ist.

Weiterhin kann der mindestens eine Lichtsensor ausgelegt sein, in einem Lernvorgang eine virtuelle dreidimensionale Gitterstruktur zur Definition einer Orientierung seiner Kamera anzulegen. Dies erlaubt eine genauere Ermittlung der Position und der Erfassung des Trägers der mobilen Kommunikationseinheit und damit eine zuverlässigere Identifikation für den Tracking-Vorgang.

In diesem Zusammenhang kann der mindestens eine Lichtsensor ausgelegt sein, beim Anlegen der virtuellen dreidimensionalen Gitterstruktur Merkmale eines Raums, in dem der mindestens eine Lichtsensor angeordnet ist, zu berücksichtigen, insbesondere mindestens ein Merkmal aus der folgenden Gruppe: die Position von Wänden, Fenstern und/oder Türen, die Orientierung von Wänden, Fenstern und/oder Türen sowie die Höhe, Breite und/oder Länge des Raums.

Schließlich kann die mobile Kommunikationseinheit ausgelegt sein, eine Navigationsanforderung an die zentrale Steuereinheit zu senden, wobei die zentrale Steuereinheit ausgelegt ist, unter Berücksichtigung der mittels des Trackens des Trägers der mobilen Kommunikationseinheit bestimmten aktuellen Position des Trägers der mobilen Kommunikationseinheit ein Navigationssignal an die mobile Kommunikationseinheit und/oder mindestens eine mit der zentralen Steuereinheit gekoppelte Lichtquelle auszusenden. Hierdurch wird es ermöglicht, den Komfort für einen Nutzer zu verbessern, der damit auch ohne eine Line-Of-Sight navigiert werden kann, beispielsweise via Sprachausgabe durch die mobile Kommunikationseinheit selbst, einem Headset, das mit der mobilen Kommunikationseinheit verbunden ist, oder durch die Umgebung, beispielsweise durch lichtbasiertes dynamisches Routing. Mit dieser Weiterbildung ist demnach eine Navigation ohne GPS-Signal ermöglicht. Insbesondere können Personen und Objekte auch dort weiter navigiert werden, wo keine LID mehr vorhanden ist. Beispiele hierfür wurden bereits weiter oben genannt.

Weitere vorteilhafte Ausführungsformen ergeben sich aus den Unteransprüchen.

Die in Zusammenhang mit dem erfindungsgemäßen Tracking-System vorgestellten bevorzugten Ausführungsformen und deren Vorteile gelten entsprechend, soweit anwendbar, für das erfindungsgemäße Verfahren zum Tracken eines Trägers einer mobilen Kommunikationseinheit.

Im Nachfolgenden werden nunmehr Ausführungsbeispiele der vorliegenden Erfindung unter Bezugnahme auf die beigefügten Zeichnungen näher beschrieben. Es zeigen:
- Fig. 1: ein erstes Ausführungsbeispiel eines erfindungsgemäßen Tracking-Systems;
- Fig. 2: ein zweites Ausführungsbeispiels eines erfindungsgemäßen Tracking-Systems; und
- Fig. 3: ein drittes Ausführungsbeispiel eines erfindungsgemäßen Tracking-Systems.

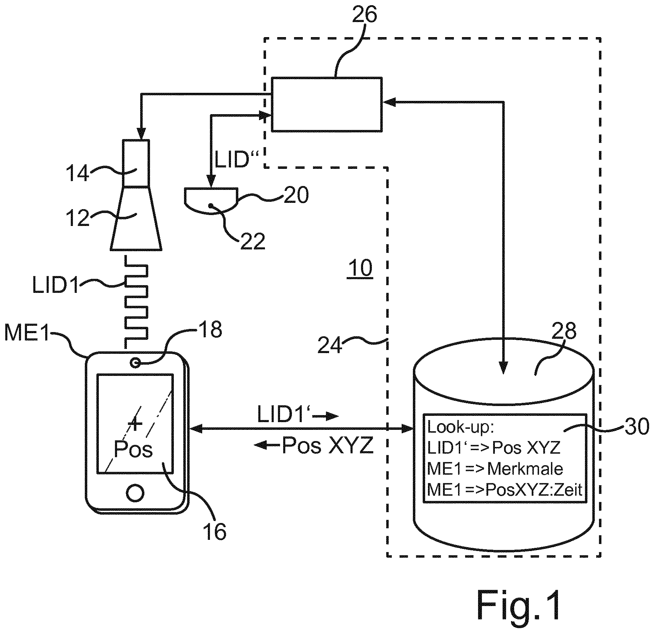

Fig. 1 zeigt in schematischer Darstellung ein erstes Ausführungsbeispiel eines erfindungsgemäßen Tracking-Systems 10. Dieses umfasst eine Lichtquelle 12 mit einem Modulator 14. Der Modulator 14 ist ausgelegt, dem Lichtsignal eine eindeutige, der Lichtquelle 12 zugeordnete Identifizierungsinformation LID1 aufzumodulieren. Bei Empfang der Identifizierungsinformation LID1 kann demnach grundsätzlich auf die spezielle Lichtquelle 12, insbesondere deren Position, rückgeschlossen werden. Es kann jedoch auch vorgesehen sein, dass der Modulator 14 der Lichtquelle 12 eine Identifizierungsinformation LID1 aufmoduliert, in der bereits die Informationen zur Position der Lichtquelle 12 enthalten sind.

Eine mobile Kommunikationseinheit ME1, vorliegend ein Smartphone, weist eine Kamera 18 auf, und ist damit ausgelegt, die von der Lichtquelle 12 ausgesendete Identifizierungsinformation LID1 unter Verwendung ihrer Kamera 18 zu empfangen. Das Tracking-System 10 umfasst weiterhin einen Lichtsensor 20, der ebenfalls eine Kamera 22 aufweist. Darüber hinaus ist eine zentrale Steuereinheit 24 vorgesehen, die im Ausführungsbeispiel ein intelligentes Lichtmanagementsystem (iLMS) 26 umfasst sowie einen Server 28 mit einer Speichervorrichtung 30, in der eine Look-Up-Tabelle hinterlegt ist. Die zentrale Steuereinheit 24 ist mit dem Lichtsensor 20 und der Lichtquelle 12 gekoppelt. Die mobile Kommunikationseinheit ME1 kann insbesondere über WLAN oder Bluetooth oder UMTS mit der zentralen Steuereinheit 24 kommunizieren.

Wenn auf der mobilen Kommunikationseinheit ME1 eine vorgebbare Anwendung gestartet wurde, ist die mobile Kommunikationseinheit ME1 ausgelegt, bei Empfang der Identifizierungsinformation LID1 ein Aktivierungssignal LID1' zum Aktivieren eines Tracking-Vorgangs an die zentrale Steuereinheit 24 auszusenden. Das Aktivierungssignal LID1' umfasst mit der empfangenen Identifizierungsinformation LID1 korrelierte Daten.

Die zentrale Steuereinheit 24 schlägt das übermittelte Aktivierungssignal LID1' in der Look-Up-Tabelle 30 nach und ermittelt daraufhin eine Position XYZ für die mobile Kommunikationseinheit ME1. Die ermittelte Position XYZ wird weiterhin parallel von der zentralen Steuereinheit 24 über das iLMS 26 an den Lichtsensor 20 gesendet. Unter Verwendung eines dreidimensionalen virtuellen XYZ-Gitters, welches zuvor vom Lichtsensor 20 im Rahmen eines Anlernvorgangs angelegt wurde oder unter Verwendung einer dreidimensionalen Karte unter Berücksichtigung der Position des Lichtsensors 20 an der Decke und der Abmessungen des Raums berechnet wurde, kann die Kamera 22 des Lichtsensors 20 Bilder der mobilen Kommunikationseinheit ME1 an der Position XYZ aufzeichnen und zur Auswertung an die zentrale Steuereinheit 24 senden.

Um die Erkennungs- und Tracking-Rate weiter zu verbessern, kann unter Verwendung eines oder mehrerer Lichtsensoren 20 ein dreidimensionales Modell des Objekts bzw. des Trägers der mobilen Kommunikationseinheit ME1 angelegt werden. Diese Merkmale können, siehe Fig. 1, in der Look-Up-Tabelle des Servers 28 abgelegt sein und stehen dort für weitere Lichtsensoren 20 bereit, um die Person bzw. das Objekt weiter zu tracken, wenn diese bzw. dieses den Raum verlässt oder die entsprechende mobile Kommunikationseinheit ME1 nicht mehr sichtbar ist.

Diese ermittelte Position überträgt die zentrale Steuereinheit 24 zurück an die mobile Kommunikationseinheit ME1, sodass die ermittelte Position auf einem Monitor 16 der mobilen Kommunikationseinheit ME1 innerhalb einer Umgebung angezeigt wird. In der Look-Up-Tabelle sind dem Sender des Aktivierungssignals LID1', also dem Träger der mobilen Kommunikationseinheit ME1, die oben bzw. weiter unten erwähnten ermittelten Merkmale und Eigenschaften zugeordnet. Weiterhin verfügt die zentrale Steuereinheit 24 über eine Uhr. Auf diese Weise kann die jeweils ermittelte Position der mobilen Kommunikationseinheit ME1 zusammen mit einem Zeitstempel in der zentralen Steuereinheit 24 abgespeichert werden.

Der Lichtsensor 20 empfängt dieselbe Identifizierungsinformation LID1 mittels einer Kamera 22 und übermittelt diese Information an die zentrale Steuereinheit 24. Aufgrund eines Vergleichs des Aktivierungssignals LID1' mit der vom Lichtsensor 20 übermittelten Information LID" weiß die zentrale Steuereinheit 24, welcher Lichtsensor 20 derart zu der aktuellen Position der mobilen Kommunikationseinheit ME1 angeordnet ist, dass mit dessen Kamera 22 die mobile Kommunikationseinheit ME1 erfassbar ist. Daraufhin steuert die zentrale Steuereinheit 24 die Kamera 22 des ermittelten Lichtsensors 20 zum Bereitstellen von Bildinformationen mittels seiner Kamera 22 an die zentrale Steuereinheit 24 an, um einen Träger der mobilen Kommunikationseinheit ME1 an der ermittelten Position zu ermitteln und zu identifizieren.

Die zentrale Steuereinheit 24 ist ausgelegt, entweder den Lichtsensor 20 oder mindestens einen weiteren Lichtsensor 20 zum Tracken des identifizierten Trägers der mobilen Kommunikationseinheit ME1 anzusteuern.

Die Übermittlung der ermittelten aktuellen Position XYZ der mobilen Kommunikationseinheit ME1 von der zentralen Steuereinheit 24 zur mobilen Kommunikationseinheit ME1 und entsprechende Anzeige auf einem Monitor der mobilen Kommunikationseinheit ME1 zusammen mit Umgebungsinformationen ermöglicht eine Unterstützung beim Navigieren der mobilen Kommunikationseinheit ME1 zu einem gewünschten Ort.

Die mobile Kommunikationseinheit ME1 kann ausgelegt sein, den relativen Raumwinkel zu ermitteln, unter dem die Lichtquelle 12, deren Identifizierungsinformation LID1 sie empfängt, gegenüber der aktuellen Lage der mobilen Kommunikationseinheit ME1 angeordnet ist. Dieser Raumwinkel kann beim Ermitteln der Position der mobilen Kommunikationseinheit ME1 berücksichtigt werden, insbesondere durch die mobile Kommunikationseinheit ME1 selbst oder die zentrale Steuereinheit 24.

Die mobile Kommunikationseinheit ME1 kann weitere Sensoren umfassen, insbesondere Magnetfeldsensoren und/oder Beschleunigungssensoren, wobei das Tracking-System, insbesondere die mobile Kommunikationseinheit ME1 und/oder die zentrale Steuereinheit 24, ausgelegt sein kann, die Messwerte dieses mindestens einen weiteren Sensors bei der Ermittlung der Position der mobilen Kommunikationseinheit ME1 zu berücksichtigen. Zur Ermittlung weiterer Eigenschaften des Trägers der mobilen Kommunikationseinheit ME1 können die von der Kamera 22 des Lichtsensors 20 empfangenen Signale im Lichtsensor 20 selbst oder in der zentralen Steuereinheit 24 ausgewertet werden, um Merkmale des Trägers der mobilen Kommunikationseinheit ME1 zu ermitteln und beim Tracken des Trägers der mobilen Kommunikationseinheit ME1 zu berücksichtigen. Dabei handelt es sich insbesondere um die Größe, die Art des Trägers, das Geschlecht, den Haarschnitt, die Haarfarbe, Gesichtsmerkmale und/oder Kleidungsmerkmale. Der Lichtsensor 20 kann ebenfalls weitere Sensoren umfassen, beispielsweise mindestens ein Mikrofon, wobei der Lichtsensor 20 ausgelegt sein kann, mittels des mindestens einen Mikrofons ein akustisches Merkmal, insbesondere Sprache und/oder Auftrittsgeräusch des Trägers der mobilen Kommunikationseinheit ME1 zu ermitteln und beim Tracken des Trägers der mobilen Kommunikationseinheit ME1 zu berücksichtigen. Aufgrund seiner ursprünglichen Funktion ist in dem Lichtsensor 20 bevorzugt auch ein Spektralsensor zum Durchführen einer spektralen Bewertung einer Beleuchtungssituation angeordnet. Weitere Sensoren können Temperatursensor oder Luftfeuchtigkeitssensor sein.

Wird von der zentralen Steuereinheit 24 das Aktivierungssignal LID1' empfangen, kann diese ausgelegt sein, über das iLMS 26 die Lichtquelle 12 derart anzusteuern, insbesondere deren Modulator 14, dass diese ein vorbestimmtes Lichtsignal aussendet. Der Lichtsensor 20, der dieses vorbestimmte Lichtsignal empfängt, kann dieses beim Tracken des Trägers der mobilen Kommunikationseinheit ME1 berücksichtigen.

Die mobile Kommunikationseinheit ME1 kann ausgelegt sein, eine Navigationsanforderung an die zentrale Steuereinheit 24 zu senden. Dabei ist die zentrale Steuereinheit 24 ausgelegt, unter Berücksichtigung der mittels des Trackens des Trägers der mobilen Kommunikationseinheit ME1 bestimmten aktuellen Position des Trägers der mobilen Kommunikationseinheit ME1 ein Navigationssignal an die mobile Kommunikationseinheit ME1 zu senden und/oder mindestens eine mit der zentralen Steuereinheit 24 gekoppelte Lichtquelle 12 entsprechend anzusteuern. Sind beispielsweise in einem großen Raum oder in einem langen Gang verschiedene Lichtquellen 12 angeordnet, so können diese zur Umsetzung eines lichtbasierten dynamischen Routings angesteuert werden.

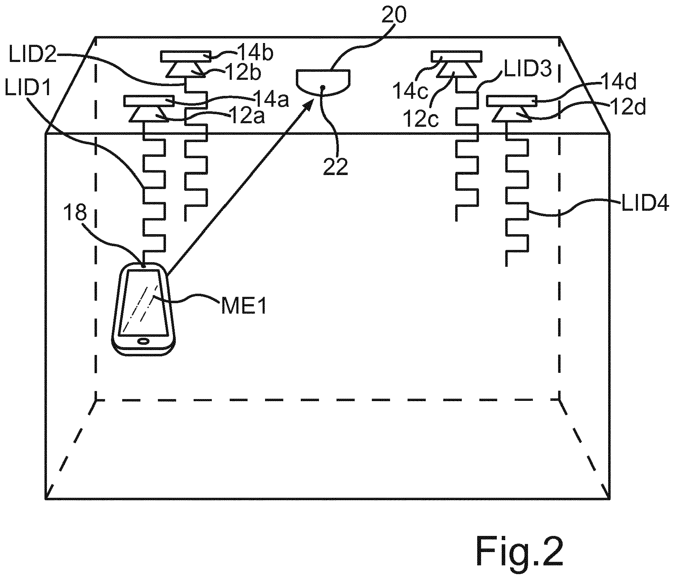

Fig. 2 zeigt in schematischer Darstellung ein zweites Ausführungsbeispiel eines erfindungsgemäßen Tracking-Systems. Der Übersichtlichkeit halber ist die zentrale Steuereinheit 24 weggelassen worden. Erkennbar ist die Situation, dass in einem Raum verschiedene Lichtquellen 12a bis 12d mit entsprechenden Modulatoren 14a bis 14d angeordnet sind. Die unterschiedlichen Lichtquellen 12a bis 12d geben mit ihrem Lichtsignal unterschiedliche Identifizierungsinformation LID1 bis LID 4 ab. In der zentralen Steuereinheit 24 ist abgelegt, dass der spezielle Lichtsensor 20 mit seiner Kamera 22 den Bereich abdecken kann, in dem von einer mobilen Kommunikationseinheit ME1 Identifizierungsinformation LID1 bis LID4 empfangen werden kann. Die Kommunikationseinheit ME1 kann ausgelegt sein, lediglich mit der Identifizierungsinformation korrelierte Daten im Rahmen eines Aktivierungssignals an die zentrale Steuereinheit 24 zu senden, die sie mit dem stärksten Empfangspegel empfängt. Im vorliegenden Fall ist dies die Identifizierungsinformation LID1 von der Lichtquelle 12a. Die zentrale Steuereinheit 24 weiß daher, dass sie bei der Auswertung des vom Lichtsensor 20 bereitgestellten Bildsignals den Träger der mobilen Kommunikationseinheit ME1 im Raum in der Nähe der Lichtquelle 12a, d.h. ziemlich weit links, zu suchen hat.

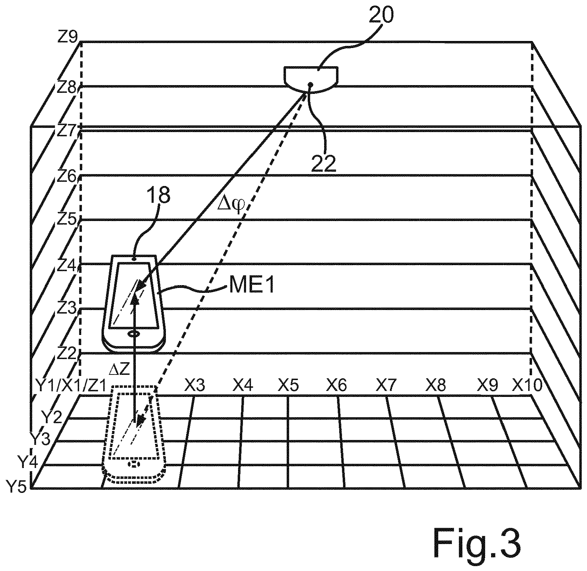

Fig. 3 zeigt ein weiteres Ausführungsbeispiel eines erfindungsgemäßen Tracking-Systems, wobei die Lichtquellen 12, Modulatoren 14 sowie die zentrale Steuereinheit 24 der Übersichtlichkeit halber weggelassen wurden. In diesem Fall ist der Lichtsensor 20 ausgelegt, in einem Anlernvorgang eine virtuelle dreidimensionale Gitterstruktur zur Definition einer Orientierung seiner Kamera 22 anzulegen. Dabei kann der Lichtsensor 20 ausgelegt sein, beim Anlegen der virtuellen dreidimensionalen Gitterstruktur Merkmale eines Raums, in dem der Lichtsensor 20 angeordnet ist, zu berücksichtigen, insbesondere die Position von Wänden, Fenstern und Türen, die Orientierung von Wänden, Fenstern und Türen sowie die Höhe, Breite und Länge des Raums.

In dem Tracking-System 10, insbesondere in der mobilen Kommunikationseinheit ME1 und/oder in der zentralen Steuereinheit 24, kann eine vorgebbare Position ΔZ der mobilen Kommunikationseinheit ME1 in vertikaler Richtung hinterlegt sein. Das Tracking-System 10, insbesondere die mobile Kommunikationseinheit ME1 und/oder die zentrale Steuereinheit 24, kann ausgelegt sein, diese vorgebbare Position ΔZ beim Ermitteln der Position der mobilen Kommunikationseinheit ME1 zu berücksichtigen. Wie aus der Darstellung von Fig. 3 deutlich hervorgeht, ergibt sich eine Winkeldifferenz Δϕ zwischen zwei Positionen, wobei in der ersten Position angenommen wird, dass sich die mobile Kommunikationseinheit ME1 am Boden des Raums befindet, während sie in der zweiten Position in einer Höhe ΔZ über dem Boden angeordnet ist. Durch Berücksichtigung einer geeigneten vertikalen Position können Parallaxenfehler zuverlässig vermieden werden. In Kenntnis der vertikalen Position ΔZ kann das Tracking-System 10 den Träger der mobilen Kommunikationseinheit ME1 an einer anderen Stelle ermitteln und identifizieren, als ohne diese Kenntnis. Insbesondere wenn mehrere Personen oder Objekte mit mobilen Kommunikationseinheiten dicht beieinander angeordnet sind oder zwischen der zu trackenden mobilen Kommunikationseinheit ME1 und dem Lichtsensor 20, kann so die Suche nach dem Träger der zu trackenden mobilen Kommunikationseinheit ME1 deutlich präziser durchgeführt werden.

In einem Anwendungsbeispiel kann von einem Shop eine App bereitgestellt werden, die auf eine mobile Kommunikationseinheit ME1 geladen und dort aktiviert werden kann. Damit kann eine Einkaufsliste an einen Server des Shops hochgeladen werden. Bei aktivierter App kann durch Empfang einer Identifizierungsinformation und Weiterleitung damit korrelierter Daten an einen Server des Shops ein Tracking-Vorgang initiiert werden. Daraufhin kann der Kunde getrackt und beispielsweise derart durch den Shop dirigiert werden, dass er seine Shopping-Liste auf der kürzest möglichen Distanz abarbeiten kann. Zusätzlich oder alternativ kann die Navigation so erfolgen, dass der Kunde im Rahmen seiner Einkaufrunde an Orten vorbei navigiert wird, an denen Sonderangebote ausgestellt sind.

## Patentansprüche

1. Tracking-System (10) umfassend:
- mindestens eine Lichtquelle (12), die ausgelegt ist mit einem Lichtsignal eine eindeutige, der Lichtquelle (12) zugeordnete Identifizierungsinformation (LID1) auszusenden; sowie
- eine mobile Kommunikationseinheit (ME1) mit einer Kamera (18), wobei die mobile Kommunikationseinheit (ME1) ausgelegt ist, die von der mindestens einen Lichtquelle (12) ausgesendete Identifizierungsinformation (LID1) unter Verwendung ihrer Kamera zu (18) empfangen;
**dadurch gekennzeichnet, dass**
das Tracking-System (10) weiterhin umfasst:
- mindestens einen Lichtsensor (20) mit einer Kamera (22);
- eine zentrale Steuereinheit (24), die zumindest mit dem mindestens einen Lichtsensor (20) gekoppelt ist;
- wobei die mobile Kommunikationseinheit (ME1) weiterhin ausgelegt ist, bei Empfang der Identifizierungsinformation (LID1) ein Aktivierungssignal (LID1') zum Aktivieren eines Tracking-Vorgangs an die zentrale Steuereinheit (24) auszusenden, wobei das Aktivierungssignal (LID1') mit der empfangenen Identifizierungsinformation (LID1) korrelierte Daten umfasst;
- wobei die zentrale Steuereinheit (24) ausgelegt ist, auf der Basis des von der mobilen Kommunikationseinheit (ME1) übermittelten Aktivierungssignals (LID1') zu ermitteln, an welcher Position die mobile Kommunikationseinheit (ME1) angeordnet ist und welcher mindestens eine Lichtsensor (20) derart zu der Position der mobilen Kommunikationseinheit (ME1) angeordnet ist, dass mit dessen Kamera (22) die mobile Kommunikationseinheit (ME1) erfassbar ist, wobei die zentrale Steuereinheit (24) weiterhin ausgelegt ist, die Kamera (22) des ermittelten zumindest eines Lichtsensors (20) zum Bereitstellen von Bildinformation mittels seiner Kamera (22) an die zentrale Steuereinheit (24) anzusteuern, um einen Träger der mobilen Kommunikationseinheit (ME1) an der ermittelten Position zu ermitteln und zu identifizieren;
- wobei die zentrale Steuereinheit (24) weiterhin ausgelegt ist, mindestens einen mit ihr gekoppelten Lichtsensor (20) zum Tracken des identifizierten Trägers der mobilen Kommunikationseinheit (ME1) anzusteuern.

2. Tracking-System (10) nach Anspruch 1,
**dadurch gekennzeichnet, dass**
der mindestens eine Lichtsensor (20) ausgelegt ist, die von der mindestens einen Lichtquelle (12) ausgesendete Identifizierungsinformation (LID1) unter Verwendung seiner Kamera (22) zu empfangen und damit korrelierte Daten an die zentrale Steuereinheit (24) zu senden, wobei die zentrale Steuereinheit (24) ausgelegt ist aus einem Vergleich der von dem mindestens einen Lichtsensor (20) an die zentrale Steuereinheit (24) gesendeten Daten mit den von der mobilen Kommunikationseinheit (ME1) an die zentrale Steuereinheit (24) gesendeten Daten zu ermitteln, welcher mindestens eine Lichtsensor (20) derart zu der Position der mobilen Kommunikationseinheit (ME1) angeordnet ist, dass mit dessen Kamera (22) die mobile Kommunikationseinheit (ME1) erfassbar ist.

3. Tracking-System (10) nach Anspruch 1,
**dadurch gekennzeichnet, dass**
in der zentralen Steuereinheit (24) die Position des mindestens einen Lichtsensors (20) hinterlegt ist, wobei die zentrale Steuereinheit (24) ausgelegt ist, durch eine Auswertung der von der mobilen Kommunikationseinheit (ME1) an die zentrale Steuereinheit (24) gesendeten Daten und einen Vergleich der ausgewerteten Daten mit der hinterlegten Position des mindestens einen Lichtsensors (20) zu ermitteln, welcher mindestens eine Lichtsensor (20) derart zu der Position der mobilen Kommunikationseinheit (ME1) angeordnet ist, dass mit dessen Kamera (22) die mobile Kommunikationseinheit (ME1) erfassbar ist.

4. Tracking-System (10) nach Anspruch 3,
**dadurch gekennzeichnet, dass**
in der zentralen Steuereinheit (24) eine Look-Up-Tabelle (30) hinterlegt ist, aus der auf der Basis der von der mobilen Kommunikationseinheit (ME1) gesendeten Daten Angaben zur Position der mobilen Kommunikationseinheit (ME1) ermittelbar sind.

5. Tracking-System (10) nach Anspruch 3,
**dadurch gekennzeichnet, dass**
in der von mindestens einer Lichtquelle (20) ausgesendeten Identifizierungsinformation (LID1) eine Positionsangabe der Lichtquelle (12) enthalten ist, wobei die zentrale Steuereinheit (24) ausgelegt ist, aus den von der mobilen Kommunikationseinheit (ME1) an die zentrale Steuereinheit (24) gesendeten Daten eine Position der mobilen Kommunikationseinheit (ME1) zu ermitteln.

6. Tracking-System (10) nach einem der vorhergehenden Ansprüche,
**dadurch gekennzeichnet, dass**
die mobile Kommunikationseinheit (ME1) ausgelegt ist, den relativen Raumwinkel zu ermitteln, unter dem die mindestens eine Lichtquelle (12), deren Identifizierungsinformation (LID1) sie empfängt, gegenüber der aktuellen Lage der mobilen Kommunikationseinheit (ME1) angeordnet ist.

7. Tracking-System (10) nach Anspruch 6,
**dadurch gekennzeichnet, dass**
das Tracking-System (10), insbesondere die mobile Kommunikationseinheit (ME1) und/oder die zentrale Steuereinheit (24), ausgelegt ist, den ermittelten relativen Raumwinkel beim Ermitteln der Position der mobilen Kommunikationseinheit (ME1) zu berücksichtigen.

8. Tracking-System (10) nach einem der vorhergehenden Ansprüche,
**dadurch gekennzeichnet, dass**
in dem Tracking-System (10), insbesondere in der mobilen Kommunikationseinheit (ME1) und/oder in der zentralen Steuereinheit (24), eine vorgebbare Position der mobilen Kommunikationseinheit (ME1) in vertikaler Richtung (ΔZ) hinterlegt ist, wobei das Tracking-System (10), insbesondere die mobile Kommunikationseinheit (ME1) und/oder die zentrale Steuereinheit (24), ausgelegt ist, diese vorgebbare Position (ΔZ) beim Ermitteln der Position der mobilen Kommunikationseinheit (ME1) zu berücksichtigen.

9. Tracking-System (10) nach einem der vorhergehenden Ansprüche,
**dadurch gekennzeichnet, dass**
die mobile Kommunikationseinheit (ME1) mindestens einen weiteren Sensor, insbesondere einen Magnetfeldsensor und/oder einen Beschleunigungssensor, umfasst, wobei das Tracking-System (10), insbesondere die mobile Kommunikationseinheit (ME1) und/oder die zentrale Steuereinheit (24), ausgelegt ist, die Messwerte dieses mindestens einen weiteren Sensors bei der Ermittlung der Position der mobilen Kommunikationseinheit, insbesondere ihrer absoluten Position, zu berücksichtigen.

10. Tracking-System (10) nach einem der vorhergehenden Ansprüche,
**dadurch gekennzeichnet, dass**
der mindestens eine Lichtsensor (20) ausgelegt ist, bei Erfassung des Trägers der mobilen Kommunikationseinheit (ME1) eine entsprechende Information an die zentrale Steuereinheit (24) zu senden.

11. Tracking-System (10) nach einem der vorhergehenden Ansprüche,
**dadurch gekennzeichnet, dass**
das Tracking-System (10), insbesondere der mindestens eine Lichtsensor (20) und/oder die zentrale Steuereinheit (24), ausgelegt ist, Merkmale, insbesondere Größe, Art des Trägers, Geschlecht, Haarschnitt, Haarfarbe, Gesichtsmerkmale und/oder Kleidungsmerkmale, des Trägers der mobilen Kommunikationseinheit (ME1) zu ermitteln und beim Tracken des Trägers der mobilen Kommunikationseinheit (ME1) zu berücksichtigen.

12. Tracking-System (10) nach einem der vorhergehenden Ansprüche,
**dadurch gekennzeichnet, dass**
der mindestens eine Lichtsensor (20) mindestens einen Sensor aus der nachfolgenden Gruppe von Sensoren umfasst:
- mindestens ein Mikrofon, wobei der mindestens eine Lichtsensor (20) ausgelegt ist, mittels des mindestens einen Mikrofons ein akustisches Merkmal, insbesondere Sprache und/oder Auftrittsgeräusch des Trägers der mobilen Kommunikationseinheit (ME1), zu ermitteln und beim Tracken des Trägers der mobilen Kommunikationseinheit (ME1) zu berücksichtigen;
- Spektralsensor zum Durchführen einer spektralen Bewertung einer Beleuchtungssituation.

13. Tracking-System (10) nach einem der vorhergehenden Ansprüche,
**dadurch gekennzeichnet, dass**
die zentrale Steuereinheit (24) ausgelegt ist, bei Empfang eines von der mobilen Kommunikationseinheit (ME1) gesendeten Aktivierungssignals (LID1') mit Daten, die mit der Identifizierungsinformation (LID1) der mindestens einen Lichtquelle (12) korreliert sind, die entsprechende Lichtquelle (12) derart anzusteuern, dass diese ein vorbestimmtes Lichtsignal aussendet.

14. Tracking-System (10) nach Anspruch 13,
**dadurch gekennzeichnet, dass**
der mindestens eine Lichtsensor (20) ausgelegt ist, das vorbestimmte Lichtsignal zu empfangen und beim Tracken des Trägers der mobilen Kommunikationseinheit (ME1) zu berücksichtigen.

15. Tracking-System (10) nach einem der vorhergehenden Ansprüche,
**dadurch gekennzeichnet, dass**
der mindestens eine Lichtsensor (20) ausgelegt ist, in einem Lernvorgang eine virtuelle dreidimensionale Gitterstruktur zur Definition einer Orientierung seiner Kamera (22) anzulegen.

16. Tracking-System (10) nach Anspruch 15,
**dadurch gekennzeichnet, dass**
der mindestens eine Lichtsensor (20) ausgelegt ist, beim Anlegen der virtuellen dreidimensionalen Gitterstruktur Merkmale eines Raums, in dem der mindestens eine Lichtsensor (20) angeordnet ist, zu berücksichtigen, insbesondere mindestens ein Merkmal aus der folgenden Gruppe:
- die Position von Wänden, Fenstern und/oder Türen;
- die Orientierung von Wänden, Fenstern, Türen; sowie
- die Höhe, Breite, Länge des Raums.

17. Tracking-System (10) nach einem der vorhergehenden Ansprüche,
**dadurch gekennzeichnet, dass**
die mobile Kommunikationseinheit (ME1) ausgelegt ist, eine Navigationsanforderung an die zentrale Steuereinheit (24) zu senden, wobei die zentrale Steuereinheit (24) ausgelegt ist, unter Berücksichtigung der mittels des Trackens des Trägers der mobilen Kommunikationseinheit (ME1) bestimmten aktuellen Position des Trägers der mobilen Kommunikationseinheit (ME1) ein Navigationssignal an die mobile Kommunikationseinheit (ME1) und/oder mindestens eine mit der zentralen Steuereinheit (24) gekoppelte Lichtquelle (12) auszusenden.

18. Verfahren zum Tracken eines Trägers einer mobilen Kommunikationseinheit (ME1) mittels eines Tracking-Systems (10) umfassend mindestens eine Lichtquelle (12), die ausgelegt ist mit einem Lichtsignal eine eindeutige, der Lichtquelle (12) zugeordnete Identifizierungsinformation (LID1) auszusenden; sowie eine mobile Kommunikationseinheit (ME1) mit einer Kamera (18), wobei die mobile Kommunikationseinheit (ME1) ausgelegt ist, die von der mindestens einen Lichtquelle (12) ausgesendete Identifizierungsinformation (LID1) unter Verwendung ihrer Kamera (18) zu empfangen;
**gekennzeichnet durch** folgende Schritte:
- Koppeln einer zentralen Steuereinheit (24) mit zumindest dem mindestens einen Lichtsensor (20);
- wenn die mobile Kommunikationseinheit (ME1) Identifizierungsinformation (LID1) der mindestens einen Lichtquelle (12) empfängt, sendet sie ein Aktivierungssignal (LID1') zum Aktivieren eines Tracking-Vorgangs an die zentrale Steuereinheit (24), wobei sie das Aktivierungssignal (LID1') so bildet, dass es mit der empfangenen Identifizierungsinformation (LID1) korrelierte Daten umfasst;
- die zentrale Steuereinheit (24) ermittelt auf der Basis des von der mobilen Kommunikationseinheit (ME1) übermittelten Aktivierungssignals (LID1'), an welcher Position die mobile Kommunikationseinheit (ME1) angeordnet ist und welcher mindestens eine Lichtsensor (20) derart zu der Position der mobilen Kommunikationseinheit (ME1) angeordnet ist, dass dessen Kamera (22) die mobile Kommunikationseinheit (ME1) erfassen kann,
- die zentrale Steuereinheit (24) steuert die Kamera (22) des ermittelten zumindest eines Lichtsensors (20) derart an, dass diese Bildinformation an die zentrale Steuereinheit (24) bereitstellt;
- auf der Basis dieser Bildinformation ermittelt und identifiziert die zentrale Steuereinheit (24) an der ermittelten Position einen Träger der mobilen Kommunikationseinheit (ME1); und
- die zentrale Steuereinheit (24) steuert mindestens einen mit ihr gekoppelten Lichtsensor (20) zum Tracken des identifizierten Trägers der mobilen Kommunikationseinheit (ME1) an.

## Claims

1. Tracking system (10) comprising:
- at least one light source (12), which is designed to broadcast a unique identification information item (LID1) associated with the light source (12) using a light signal; and
- a mobile communication unit (ME1) having a camera (18), wherein the mobile communication unit (ME1) is designed to receive with the aid of its camera (18) the identification information item (LID1) broadcast by the at least one light source (12);
**characterized in that**
the tracking system (10) also comprises:
- at least one light sensor (20) with a camera (22);
- a central control unit (24) which is at least coupled to the at least one light sensor (20);
- wherein upon receipt of the identification information item (LID1), the mobile communication unit (ME1) is further designed to broadcast an activation signal (LID1') to the central control unit (24) for activating a tracking operation, the activation signal (LID1') comprising data correlated with the received identification information item (LID1);
- wherein the central control unit (24) is designed to determine, on the basis of the activation signal (LID1') transmitted by the mobile communication unit (ME1), at which position the mobile communication unit (ME1) is arranged and which at least one light sensor (20) is arranged relative to the position of the mobile communication unit (ME1) in such a way that the mobile communication unit (ME1) can be detected by the camera (22) of said light sensor, wherein the central control unit (24) is furthermore designed to activate the camera (22) of the at least one detected light sensor (20) for providing image information by means of its camera (22) to the central control unit (24), in order to determine and identify a carrier of the mobile communication unit (ME1) at the determined position;
- wherein the central control unit (24) is further designed to activate at least one light sensor (20) which is coupled to said central control unit for tracking the identified carrier of the mobile communication unit (ME1).

2. Tracking system (10) according to Claim 1, **characterized in that** the at least one light sensor (20) is designed to receive with the aid of its camera (22) the identification information item (LID1) broadcast by the at least one light source (12) and to send data correlated therewith to the central control unit (24), wherein the central control unit (24) is designed to determine, from a comparison of the data sent by the at least one light sensor (20) to the central control unit (24) with the data sent by the mobile communication unit (ME1) to the central control unit (24), which at least one light sensor (20) is arranged relative to the position of the mobile communication unit (ME1) in such a way that the mobile communication unit (ME1) can be detected by the camera (22) of said light sensor.

3. Tracking system (10) according to Claim 1, **characterized in that** in the central control unit (24) the position of the at least one light sensor (20) is stored, the central control unit (24) being designed to determine, by means of an evaluation of the data sent by the mobile communication unit (ME1) to the central control unit (24) and a comparison of the evaluated data with the stored position of the at least one light sensor (20), which at least one light sensor (20) is arranged relative to the position of the mobile communication unit (ME1) in such a way that the mobile communication unit (ME1) can be detected by the camera (22) of said light sensor.

4. Tracking system (10) according to Claim 3, **characterized in that** a look-up table (30) is stored in the central control unit (24), from which, on the basis of the data sent by the mobile communication unit (ME1), information about the position of the mobile communication unit (ME1) can be determined.

5. Tracking system (10) according to Claim 3, **characterized in that** the identification information item (LID1) broadcast by the at least one light source (20) contains a position specification of the light source (12), wherein the central control unit (24) is designed to determine a position of the mobile communication unit (ME1) from the data sent by the mobile communication unit (ME1) to the central control unit (24) .

6. Tracking system (10) according to any of the preceding claims, **characterized in that** the mobile communication unit (ME1) is designed to determine the relative solid angle under which the at least one light source (12), the identification information item (LID1) of which it receives, is arranged relative to the current position of the mobile communication unit (ME1).

7. Tracking system (10) according to Claim 6, **characterized in that** the tracking system (10), in particular the mobile communication unit (ME1) and/or the central control unit (24), is designed to take into account the determined relative solid angle when determining the position of the mobile communication unit (ME1).

8. Tracking system (10) according to any of the preceding claims, **characterized in that** in the tracking system (10), in particular in the mobile communication unit (ME1) and/or in the central control unit (24), a predefinable position of the mobile communication unit (ME1) in the vertical direction (ΔZ) is stored, wherein the tracking system (10), in particular the mobile communication unit (ME1) and/or the central control unit (24), is designed to take this predefinable position (ΔZ) into account when determining the position of the mobile communication unit (ME1).

9. Tracking system (10) according to any of the preceding claims, **characterized in that** the mobile communication unit (ME1) comprises at least one additional sensor, in particular a magnetic field sensor and/or an acceleration sensor, wherein the tracking system (10), in particular the mobile communication unit (ME1) and/or the central control unit (24), is designed to take into account the measurement values of this at least one additional sensor when determining the position of the mobile communication unit, in particular the absolute position thereof.

10. Tracking system (10) according to any of the preceding claims, **characterized in that** the at least one light sensor (20) is designed to send a corresponding information item to the central control unit (24) when detecting the carrier of the mobile communication unit (ME1).

11. Tracking system (10) according to any of the preceding claims, **characterized in that** the tracking system (10), in particular the at least one light sensor (20) and/or the central control unit (24), is designed to identify features, in particular size, nature of the carrier, gender, hairstyle, hair color, facial features and/or clothing features, of the carrier of the mobile communication unit (ME1), and to take into account said features when tracking the carrier of the mobile communication unit (ME1).

12. Tracking system (10) according to any of the preceding claims, **characterized in that** the at least one light sensor (20) comprises at least one sensor from the following group of sensors:
- at least one microphone, wherein the at least one light sensor (20) is designed to identify by means of the at least one microphone an acoustic feature, in particular speech and/or footfall sound of the carrier of the mobile communication unit (ME1), and to take said feature into account when tracking the carrier of the mobile communication unit (ME1);
- a spectral sensor for carrying out a spectral analysis of a lighting situation.

13. Tracking system (10) according to any of the preceding claims, **characterized in that** the central control unit (24) is designed, on receipt of an activation signal (LID1') sent by the mobile communication unit (ME1) with data that are correlated with the identification information item (LID1) of the at least one light source (12), to activate the appropriate light source (12) in such a way that it broadcasts a predefined light signal.

14. Tracking system (10) according to Claim 13, **characterized in that** the at least one light sensor (20) is designed to receive the predefined light signal and to take it into consideration when tracking the carrier of the mobile communication unit (ME1).

15. The tracking system (10) according to any of the preceding claims, **characterized in that** the at least one light sensor (20) is designed to create a virtual three-dimensional grid structure in a learning process, for defining an orientation of its camera (22).

16. Tracking system (10) according to Claim 15, **characterized in that** the at least one light sensor (20) is designed, when creating the virtual three-dimensional grid structure, to take into account features of a room in which the at least one light sensor (20) is arranged, in particular, at least one feature from the following group:
- the position of walls, windows and/or doors;
- the orientation of walls, windows, doors; and
- the height, width, length of the room.

17. Tracking system (10) according to any of the preceding claims, **characterized in that** the mobile communication unit (ME1) is designed to send a navigation request to the central control unit (24), wherein the central control unit (24) is designed, taking into account the current position of the carrier of the mobile communication unit (ME1) determined by means of the tracking of the carrier of the mobile communication unit (ME1), to broadcast a navigation signal to the mobile communication unit (ME1) and/or at least one light source (12) coupled with the central control unit (24).

18. Method for tracking a carrier of a mobile communication unit (ME1) using a tracking system (10) comprising at least one light source (12), which is designed to broadcast a unique identification information item (LID1) associated with the light source (12) using a light signal; and a mobile communication unit (ME1) having a camera (18), wherein the mobile communication unit (ME1) is designed to receive with the aid of its camera (18) the identification information item (LID1) broadcast by the at least one light source (12);
**characterized by** the following steps:
- coupling a central control unit (24) to at least the at least one light sensor (20);
- when the mobile communication unit (ME1) receives an identification information item (LID1) from the at least one light source (12), it sends an activation signal (LID1') to the central control unit (24) for activating a tracking operation, wherein it forms the activation signal (LID1') such that it comprises data correlated with the received identification information item (LID1);
- the central control unit (24) determines, on the basis of the activation signal (LID1') transmitted by the mobile communication unit (ME1), at which position the mobile communication unit (ME1) is arranged and which at least one light sensor (20) is arranged relative to the position of the mobile communication unit (ME1) in such a way that the mobile communication unit (ME1) can be detected by the camera (22) of said light sensor,
- the central control unit (24) activates the camera (22) of the at least one detected light sensor (20) in such a way that said camera provides image information to the central control unit (24);
- on the basis of this image information the central control unit (24) determines and identifies at the determined position a carrier of the mobile communication unit (ME1); and
- the central control unit (24) activates at least one light sensor (20) which is coupled to said central control unit for tracking the identified carrier of the mobile communication unit (ME1).

## Revendications

1. Système de poursuite (10) comprenant :
- au moins une source de lumière (12) qui est conçue pour envoyer une information d'identification (LID1) univoque attribuée à la source de lumière (12), avec un signal lumineux ;
ainsi
- qu'une unité de communication mobile (ME1) avec une caméra (18), dans lequel l'unité de communication mobile (ME1) est conçue pour recevoir l'information d'identification (LID1) envoyée par l'au moins une source de lumière (12) en utilisant sa caméra (18) ;
**caractérisé en ce que**
le système de poursuite (10) comprend en outre :
- au moins un capteur de lumière (20) avec une caméra (22) ;
- une unité de commande centrale (24) qui est couplée au moins à l'au moins un capteur de lumière (20) ;
- dans lequel l'unité de communication mobile (ME1) est en outre conçue pour envoyer, à la réception de l'information d'identification (LID1), un signal d'activation (LID1') à l'unité de commande centrale (24) pour activer une procédure de poursuite, dans lequel le signal d'activation (LID1') comprend des données corrélées avec l'information d'identification (LID1) reçue ;
- dans lequel l'unité de commande centrale (24) est conçue pour déterminer, en se basant sur le signal d'activation (LID1') transmis par l'unité de communication mobile (ME1), à quelle position est agencée l'unité de communication mobile (ME1) et quel au moins un capteur de lumière (20) est ainsi agencé par rapport à la position de l'unité de communication mobile (ME1) que l'unité de communication mobile (ME1) peut être détectée par sa caméra (22), dans lequel l'unité de commande centrale (24) est en outre conçue pour commander la caméra (22) de l'au moins un capteur de lumière (20) déterminé pour fournir une information d'image au moyen de sa caméra (22) à l'unité de commande centrale (24) pour déterminer et identifier un porteur de l'unité de communication mobile (ME1) à la position déterminée ;
- dans lequel l'unité de commande centrale (24) est en outre conçue pour commander au moins un capteur de lumière (20) couplé avec elle pour poursuivre le porteur identifié de l'unité de communication mobile (ME1).

2. Système de poursuite (10) selon la revendication 1,
**caractérisé en ce que**
l'au moins un capteur de lumière (20) est conçu pour recevoir l'information d'identification (LID1) envoyée par l'au moins une source de lumière (12) en employant sa caméra (22) et envoyer ainsi des données corrélées à l'unité de commande centrale (24), dans lequel l'unité de commande centrale (24) est conçue pour déterminer à partir d'une comparaison des données envoyées par l'au moins un capteur de lumière (20) à l'unité de commande centrale (24) avec les données envoyées par l'unité de communication mobile (ME1) à l'unité de commande centrale (24), quel au moins un capteur de lumière (20) est agencé de telle façon par rapport à la position de l'unité de communication mobile (ME1) que l'unité de communication mobile (ME1) peut être détectée par sa caméra (22) .

3. Système de poursuite (10) selon la revendication 1,
**caractérisé en ce que** la position de l'au moins un capteur de lumière (20) est consignée dans l'unité de commande centrale (24), dans lequel l'unité de commande centrale (24) est conçue pour déterminer, par une évaluation des données envoyées par l'unité de communication mobile (ME1) à l'unité de commande centrale (24) et une comparaison des données évaluées avec la position consignée de l'au moins un capteur de lumière (20), quel au moins un capteur de lumière (20) est agencé de telle façon par rapport à la position de l'unité de communication mobile (ME1), que l'unité de communication mobile (ME1) peut être détectée par sa caméra (22).

4. Système de poursuite (10) selon la revendication 3,
**caractérisé en ce qu'**un tableau de consultation (30) est consigné dans l'unité de commande centrale (24), à partir duquel, en se basant sur les données envoyées par l'unité de communication mobile (ME1), des indications relatives à la position de l'unité de communication mobile (ME1) peuvent être déterminées.

5. Système de poursuite (10) selon la revendication 3,
**caractérisé en ce que**
dans l'information d'identification (LID1) envoyée par au moins une source de lumière (20), une indication de position de la source de lumière (12) est contenue, dans lequel l'unité de commande centrale (24) est conçue pour déterminer une position de l'unité de communication mobile (ME1) à partir des données envoyées par l'unité de communication mobile (ME1) à l'unité de commande centrale (24).

6. Système de poursuite (10) selon l'une des revendications précédentes,
**caractérisé en ce que**
l'unité de communication mobile (ME1) est conçue pour déterminer l'angle solide relatif dans lequel l'au moins une source de lumière (12), dont elle reçoit l'information d'identification (LID1), est agencée par rapport à la situation actuelle de l'unité de communication mobile (ME1).

7. Système de poursuite (10) selon la revendication 6,
**caractérisé en ce que**
le système de poursuite (10), en particulier l'unité de communication mobile (ME1) et/ou l'unité de commande centrale (24) est/sont conçue(s) pour tenir compte de l'angle solide relatif déterminé lors de la détermination de la position de l'unité de communication mobile (ME1).

8. Système de poursuite (10) selon l'une des revendications précédentes,
**caractérisé en ce qu'**une position pré-définissable de l'unité de communication mobile (ME1) dans le sens vertical (ΔZ) est consignée dans le système de poursuite (10), en particulier dans l'unité de communication mobile (ME1) et/ou dans l'unité de commande centrale (24), dans lequel le système de poursuite (10), en particulier l'unité de communication mobile (ME1) et/ou l'unité de commande centrale (24) est/sont conçue(s) pour tenir compte de cette position pré-définissable (ΔZ) lors de la détermination de la position de l'unité de communication mobile (ME1).

9. Système de poursuite (10) selon l'une des revendications précédentes,
**caractérisé en ce que**
l'unité de communication mobile (ME1) comprend au moins un capteur supplémentaire, en particulier un capteur de champ magnétique et/ou un capteur d'accélération, dans lequel le système de poursuite (10), en particulier l'unité de communication mobile (ME1) et/ou l'unité de commande centrale (24) est/sont conçue(s) pour tenir compte des valeurs de mesure de cet au moins un capteur supplémentaire lors de la détermination de la position de l'unité de communication mobile, en particulier de sa position absolue.

10. Système de poursuite (10) selon l'une des revendications précédentes,
**caractérisé en ce que**
l'au moins un capteur de lumière (20) est conçu pour envoyer, lors de la détection du porteur de l'unité de communication mobile (ME1), une information correspondante à l'unité de commande centrale (24).

11. Système de poursuite (10) selon l'une des revendications précédentes,
**caractérisé en ce que** le système de poursuite (10), en particulier l'au moins un capteur de lumière (20) et/ou l'unité de commande centrale (24) est/sont conçue(s) pour déterminer et tenir compte lors de la poursuite du porteur de l'unité de communication mobile (ME1), de caractéristiques, en particulier la taille, le type de porteur, le sexe, la coupe de cheveux, la couleur de cheveux, les signes particuliers du visage et/ou les caractéristiques des vêtements, du porteur de l'unité de communication mobile (ME1).

12. Système de poursuite (10) selon l'une des revendications précédentes,
**caractérisé en ce que** l'au moins un capteur de lumière (20) comprend au moins un capteur du groupe de capteurs suivant :
- au moins un microphone, dans lequel l'au moins un capteur de lumière (20) est conçu pour déterminer et tenir compte lors de la poursuite du porteur de l'unité de communication mobile (ME1), d'une caractéristique acoustique au moyen de l'au moins un microphone, en particulier la langue et/ou le bruit de pas du porteur de l'unité de communication mobile (ME1) ;
- un capteur spectral pour exécuter une estimation spectrale d'une situation d'éclairage.

13. Système de poursuite (10) selon l'une des revendications précédentes,
**caractérisé en ce que**
l'unité de commande centrale (24) est conçue pour, lors de la réception d'un signal d'activation (LID1') envoyé par l'unité de communication mobile (ME1) avec des données qui sont corrélées avec l'information d'activation (LID1) de l'au moins une source de lumière (12), commander la source de lumière (12) correspondante de façon à ce que celle-ci émette un signal lumineux prédéfini.

14. Système de poursuite (10) selon la revendication 13,
**caractérisé en ce que**
l'au moins un capteur de lumière (20) est conçu pour recevoir et tenir compte lors de la poursuite du porteur de l'unité de communication mobile (ME1), du signal lumineux prédéfini.

15. Système de poursuite (10) selon l'une des revendications précédentes,
**caractérisé en ce que**
l'au moins un capteur de lumière (20) est conçu pour placer dans une procédure d'apprentissage une structure maillée tridimensionnelle virtuelle pour définir une orientation de sa caméra (22).

16. Système de poursuite (10) selon la revendication 15,
**caractérisé en ce que**
l'au moins un capteur de lumière (20) est conçu pour tenir compte, lors du placement de la structure maillée tridimensionnelle virtuelle, de caractéristiques d'une pièce dans laquelle l'au moins un capteur de lumière (20) est agencé, en particulier au moins une caractéristique du groupe suivant :
- la position de murs, fenêtres et/ou portes ;
- l'orientation de murs, fenêtres, portes ; ainsi que
- la hauteur, la largeur, la longueur de la pièce.

17. Système de poursuite (10) selon l'une des revendications précédentes,
**caractérisé en ce que**
l'unité de communication mobile (ME1) est conçue pour envoyer une demande de navigation à l'unité de commande centrale (24), dans lequel l'unité de commande centrale (24) est conçue, en tenant compte de la position actuelle du porteur de l'unité de communication mobile (ME1) déterminée au moyen de la poursuite du porteur de l'unité de communication mobile (ME1), pour envoyer un signal de navigation à l'unité de communication mobile (ME1) et/ou au moins une source de lumière (12) couplée à l'unité de commande centrale (24).

18. Procédé de poursuite d'un porteur d'une unité de communication mobile (ME1) au moyen d'un système de poursuite (10) comprenant au moins une source de lumière (12) qui est conçue pour envoyer une information d'identification (LID1) univoque attribuée à la source de lumière (12), avec un signal lumineux ; ainsi qu'une unité de communication mobile (ME1) avec une caméra (18), dans lequel l'unité de communication mobile (ME1) est conçue pour recevoir l'information d'identification (LID1) envoyée par l'au moins une source de lumière (12) en utilisant sa caméra (18) ;
**caractérisé par** les étapes suivantes :
- couplage d'une unité de commande centrale (24) à au moins l'au moins un capteur de lumière (20) ;
- lorsque l'unité de communication mobile (ME1) reçoit une information d'identification (LID1) de l'au moins une source de lumière (12), elle envoie un signal d'activation (LID1') pour activer une procédure de poursuite à l'unité de commande centrale (24), dans lequel elle forme le signal d'activation (LID1') de telle façon qu'il comprend des données corrélées avec l'information d'identification (LID1) reçue ;
- l'unité de commande centrale (24) détermine en se basant sur le signal d'activation (LID1') transmis par l'unité de communication mobile (ME1), à quelle position est agencée l'unité de communication mobile (ME1) et quel au moins un capteur de lumière (20) est ainsi agencé par rapport à la position de l'unité de communication mobile (ME1) que sa caméra (22) peut détecter l'unité de communication mobile (ME1),
- l'unité de commande centrale (24) commande la caméra (22) de l'au moins un capteur de lumière (20) déterminé de telle façon que celle-ci fournisse une information d'image à l'unité de commande centrale (24) ;
- en se basant sur cette information d'image, l'unité de commande centrale (24) détermine et identifie un porteur de l'unité de communication mobile (ME1) à la position déterminée ; et
- l'unité de commande centrale (24) commande au moins un capteur de lumière (20) couplé avec elle pour poursuivre le porteur identifié de l'unité de communication mobile (ME1).
